# FASCICULE DE BREVET EUROPEEN

(11) **EP 3 077 216 B1**
(45) Date de publication et mention de la délivrance du brevet: **13.10.2021**
(21) Numéro de dépôt: 14828056.3
(22) Date de dépôt: 03.12.2014
(51) Int. Cl.: B42D 25/41, B42D 25/43, B42D 25/373, B42D 25/378, C09C 1/62

(54) **STRUCTURE DE SECURITE**
SICHERHEITSSTRUKTUR
SECURITY STRUCTURE

(30) Priorité: 03.12.2013 FR 1362046
(43) Date de publication de la demande: 12.10.2016
(73) Titulaire: HID Global CID SAS, 92150 Suresnes (FR)
(72) Inventeur: SARRAZIN, Pierre, F-38620 Saint Geoire en Valfaine (FR); GENET, Alice, 38500 Voiron (FR); LE LOARER, Thibaut, 74270 Chavannaz (FR)
(74) Mandataire: Andrieux, Benoît
(86) Numéro de dépôt international: PCT/IB2014/066554
(87) Numéro de publication internationale: WO 2015/083099

(56) Documents cités:
- WO-A1-2012/014151
- WO-A1-2013/038361
- WO-A1-2013/042061
- FR-A1- 2 849 657
- US-A- 5 629 068
- US-A1- 2011 226 147

## Description

La présente invention concerne les structures de sécurité utilisées pour sécuriser divers documents contre des tentatives de falsification ou de contrefaçon.

L'invention concerne également les éléments de sécurité incorporant de telles structures, ces éléments de sécurité étant destinés à être intégrés dans des documents, et les documents ainsi sécurisés en tant que tels.

L'invention se rapporte encore à des procédés de fabrication ou de personnalisation de telles structures.

Pour sécuriser un document, il est connu d'utiliser des éléments de sécurité dits « de premier niveau » qui sont détectables à l'œil nu en lumière visible et sans utilisation d'un appareil particulier et/ou des éléments de sécurité dits « de deuxième niveau » qui sont détectables seulement à l'aide d'un appareil relativement simple telle qu'une lampe émettant dans l'ultraviolet ou l'infrarouge. Il peut également s'avérer souhaitable d'utiliser des éléments de sécurité dits « de troisième niveau », capables de générer un signal spécifique lorsque soumis à une excitation optoélectronique, électrique, magnétique ou encore électromagnétique.

Il existe un besoin pour bénéficier de structures de sécurité qui soient facilement identifiables à l'œil nu, et constituent des sécurités de premier ou deuxième niveau.

Il a déjà été proposé d'utiliser des pigments goniochromatiques sur des documents de sécurité, afin d'apporter un effet de changement de couleur en lumière réfléchie, lorsque l'angle d'observation change.

Il existe des pigments relativement transparents, comportant un cœur formé d'un substrat plaquettaire, revêtu de couches minces produisant une couleur par interférences.

Il existe également des pigments opaques, pouvant comporter un cœur métallique, tels que divulgués par exemple par US 6,686,042.

La demande EP 227 423 divulgue une encre optiquement variable comportant un pigment plaquettaire goniochromatique.

US 2013/0189 454 divulgue une couche comportant des pigments plaquettaires magnétiquement alignés de façon à créer un effet dynamique par rapport à un fond imprimé. Cette publication ne décrit aucun effet optique qui serait obtenu en transmission.

Le brevet US 6,491,324 B1 divulgue une couche de masquage semi-transparente pour fil de sécurité. Il est mentionné que cette couche peut être obtenue à l'aide de pigments interférentiels optiquement variables, sans plus de précisions.

Le document US 2011/0226147 décrit une structure comportant au moins deux couches transparentes comportant chacune un pigment interférentiel. Ce document divulgue donc des couches comportant des images monochromatiques imprimées, chaque image étant imprimée avec une encre comprenant un pigment réagissant à une lumière de longueur d'onde différente. Un effet de changement de couleur n'est alors obtenu que par un empilement de plusieurs couches comprenant chacune un pigment réagissant à une lumière de longueur d'onde différente. Ce document divulgue, par ailleurs, des pigments formés d'oxydes métalliques.

Le document FR 2 849 657 enseigne une feuille comportant en surface une couche formée de pigments iridescents.

L'invention vise à perfectionner encore les structures de sécurité, et elle y parvient grâce à une structure de sécurité qui se caractérise par le fait qu'elle comporte une couche semi-transparente contenant un liant et au moins des particules métalliques goniochromatiques présentes au sein du liant, dans une concentration conférant à la couche sa semi-transparence. Le sens du terme goniochromatique, et plus précisément la définition d'un pigment goniochromatique est définit par la norme ISO 18451-1: 2019, 3.44.

L'invention permet de réaliser une structure, selon la revendication 1, présentant des effets optiques différents en lumière réfléchie et en lumière transmise, grâce d'une part à l'opacité intrinsèque desdites particules liée à la présence de métal et à ses propriétés goniochromatiques et d'autre part à la concentration desdites particules utilisées, qui permet de conférer sa semi-transparence à la couche qui comporte lesdites particules.

L'invention permet de percevoir un effet goniochromatique (en langue anglaise "color shift") sans passer par l'utilisation de structures interférentielles multicouches nécessitant pour leur observation un fond réfléchissant métallique opaque ni par l'utilisation de cristaux liquides nécessitant pour leur observation un fond noir opaque. La mise en œuvre de l'invention est ainsi facilitée, car elle permet une dépose de la couche semi-transparente par impression ou par couchage et une observation aisée de l'effet de changement de couleur, et moins coûteuse.

### Particules

Les particules utilisées dans l'invention présentent intrinsèquement un caractère opaque qui renforce l'effet de perception de changement de couleur, sans nécessiter la présence d'un fond réfléchissant métallique ou noir.

Les particules selon l'invention sont de préférence de forme plaquettaire. Elles peuvent présenter des faces principales opposées qui sont sensiblement planes et parallèles, par exemple avec un angle de déviation de l'une par rapport à l'autre de moins de 15°.

Les particules peuvent être allongées selon un axe longitudinal, et leur longueur L peut être nettement supérieure à leur épaisseur e, mesurée entre lesdites faces principales, le facteur de forme L/e étant de préférence supérieur ou égal à 2, mieux à 20, encore mieux à 1000, voire à 2000. De préférence, on a L/e compris entre 20 et 100.

Les particules selon l'invention comportent de préférence un cœur métallique, qui permet d'obtenir un effet réfléchissant métallique. Le fait d'avoir un cœur métallique permet en plus de pouvoir réaliser des transformations type démétallisation chimique ou modification de phase au moyen d'un laser en vue de personnaliser la couche. Pour permettre une démétallisation chimique, contrairement au brevet US 6,521,036, il est préférable de ne pas utiliser de métaux ou d'alliages anti-corrosion pour constituer le cœur.

Les métaux utilisés pour réaliser le cœur peuvent être choisis parmi l'aluminium, le cuivre, le zinc, le fer, le titane, le chrome, l'argent, l'or, le nickel et leurs alliages. Des exemples de pigments pouvant convenir en tant que particules selon l'invention sont décrits dans US 6,686,042 B1.

L'épaisseur de la couche de cœur métallique peut être supérieure ou égale à 100 angströms.

De préférence, le cœur des particules selon l'invention est en aluminium.

La taille moyenne D₅₀ en masse des particules est de préférence comprise entre 10 et 50 microns, afin de pouvoir utiliser les particules selon l'invention avec les principaux moyens connus pour l'impression et le couchage.

La nature des particules est de préférence apte à conférer à la couche semi-transparente un effet miroir en réflexion. Autrement dit, une réflexion spéculaire peut avoir lieu.

La nature des particules est apte à ne pas conférer à la couche semi-transparente de coloration en transmission.

La nature des particules confère de préférence un assombrissement en transmission des couleurs qui sont visibles en réflexion depuis le verso.

Ainsi, la couche semi-transparente peut présenter en transmission un caractère gris (achromatique) issu de la matière métallique desdites particules.

Les particules ne sont pas des particules iridescentes qui réfléchissent une partie de la lumière incidente et laissent passer une partie de la lumière incidente, de telle sorte que la couleur de la lumière transmise est complémentaire à la couleur de la lumière réfléchie.

Au contraire, les particules selon l'invention sont des particules métalliques qui agissent à la manière de miroirs en réfléchissant la lumière incidente. Elles ne laissent pas passer une partie de la lumière incidente de couleur complémentaire à celle qu'elles réfléchissent, contrairement aux particules iridescentes.

Le trajet de couleur et la saturation de la couleur lorsque l'angle d'observation varie sont de préférence plus importants que pour des particules iridescentes.

### Couche semi-transparente

La semi-transparence peut être obtenu par un dépôt métallique, tel que de l'aluminium, dont l'ajustement de la densité optique, c'est-à-dire l'ajustement de la quantité de métal déposée, permet de moduler la transmitance. La densité optique est avantageusement choisie entre 0,2 et 1,6, de préférence entre 0,4 et 1.

La couche semi-transparente permet d'obtenir un effet goniochromatique en réflexion et une transparence sensiblement incolore en transmission.

Le liant peut comporter toute substance transparente permettant une bonne dispersion et tenue des particules selon l'invention, par exemple une solution de PVA, de polyuréthane (PU), de polyacrylique, de polyester, de polyether...

Les particules selon l'invention sont de préférence orientées sensiblement à plat au sein du liant. L'orientation des particules peut s'effectuer sous l'effet de forces exercées lors de l'application, par exemple lors de l'impression, en utilisant une racle de sérigraphie, ou lors du couchage, du fait des phénomènes dynamiques mis enjeu.

Les particules selon l'invention sont de préférence dispersées de manière sensiblement uniforme au sein du liant.

L'épaisseur de la couche semi-transparente est de préférence comprise entre 2 et 50 microns, mieux entre 5 et 15 microns. De préférence, l'épaisseur de la couche semi-transparente est inférieure ou égale à 15 µm car ceci facilite l'obtention d'une monocouche de particules selon l'invention et donc des aspects de réflexion métallique et de semi-transparence particulièrement satisfaisants.

Les particules selon l'invention sont de préférence présentes, au sein du liant, sous la forme d'une monocouche.

De préférence, les particules selon l'invention sont de dimensions telles qu'elles se dispersent de manière sensiblement uniforme et sensiblement à plat dans le liant.

Par exemple, les particules présentent une taille moyenne en masse D₅₀ comprise entre 10 et 50 microns, notamment de l'ordre de 20 microns et une épaisseur comprise entre 0,5 et 5 microns, notamment de l'ordre de 1 micron.

La taille des particules est de préférence suffisamment grande pour leur conférer une mobilité réduite et éviter qu'elles ne se dispersent avec une orientation autre que sensiblement à plat.

La couche semi-transparente peut comporter au moins un agent dispersant et/ou mouillant, destiné à favoriser une dispersion sensiblement homogène des particules au sein du liant, sensiblement à plat.

La couche semi-transparente peut comporter au moins un additif à base de cire, notamment en phase solvant, destiné à favoriser à la fois une non sédimentation et une non flottaison des particules et donc une dispersion sensiblement uniforme de celles-ci au sein du liant.

La concentration en poids sec desdites particules au sein de la couche est de préférence comprise entre 5 et 50%, par rapport au poids total liant et lesdites particules, mieux entre 15 et 45%. Le volume occupé par les particules selon l'invention au sein de la couche semi-transparente est de préférence compris entre 5 et 80%, mieux entre 20 et 50%, par rapport au volume total de la couche.

La couche semi-transparente peut avoir subi une modification faisant apparaître un motif en lumière réfléchie. Ce motif est avantageusement formé par laser, lequel modifie la structure desdites particules, comme détaillé plus loin.

La couche semi-transparente peut être portée par tout type de support, et de préférence un support comportant un film en matière thermoplastique et/ou une couche fibreuse, notamment en papier.

La structure selon l'invention peut comporter au moins un autre élément de sécurité se superposant au moins partiellement, notamment totalement, à la couche semi-transparente, notamment un élément de sécurité métallisé, dé-métallisé, imprimé, un filigrane ou un marquage obtenu par laser. Cet autre élément de sécurité peut recouvrir la couche semi-transparente ou bien être masqué par la couche semi-transparente lorsque celle-ci est observée en réflexion, notamment du fait de la réflexion de la lumière par les particules métalliques, et devenir observable seulement en lumière transmise, du fait du caractère non opaque de la couche semi-transparente et notamment de sa transparence incolore en transmission.

L'autre élément de sécurité peut encore être choisi parmi les DOE (Diffractive Optical Elements), les sécurités de type "see-through", à micro-perforations, à fluorescence multicolore, cette liste n'étant pas limitative. Lorsque l'autre élément de sécurité présente un motif formé par métallisation/démétallisation, il peut s'agir de Cleartext® ou d'image tramée conférant une impression de relief.

La structure peut comporter un support, notamment un film transparent en matière thermoplastique. L'autre élément de sécurité peut être situé du même côté que la couche semi-transparente par rapport au support ou bien être situé du côté opposé à la couche semi-transparente par rapport au support.

L'effet goniochromatique apporte une sécurisation de premier niveau supplémentaire.

La structure peut comporter deux couches semi-transparentes selon l'invention, disposées par exemple au recto et au verso d'un support monocouche ou multicouche. La structure peut comporter un autre élément de sécurité disposé entre les deux couches semi-transparentes. Ces dernières peuvent être formées avec les mêmes particules selon l'invention ou avec des particules différentes. Les concentrations en particules selon l'invention des deux couches peuvent être égales ou différentes.

L'une au moins desdites couches, mieux chacune desdites couches, peut comporter une marque formée par laser, les marques étant de préférence différentes, notamment correspondant à deux vues d'un même objet ou d'une même personne, les deux marques étant de préférence au moins partiellement superposées.

La ou les marques laser peuvent se superposer pour au moins l'une d'entre elles avec un ajour formé par démétallisaton d'une couche de métal.

Lorsque la couche semi-transparente a subi une personnalisation faisant apparaître un motif en lumière réfléchie, la couche semi-transparente peut ne pas être totalement transparente dans la zone du motif de sorte à ne pas être visible en lumière transmise.

La structure peut comporter une couche d'un matériau marquable au laser par carbonisation locale, notamment du polycarbonate, se superposant à la couche semi-transparente selon l'invention, la couche marquable par laser comportant de préférence une marque formée par laser.

### Couche(s) comportant au moins un colorant

La structure selon l'invention peut comporter une couche colorée non opaque, notamment transparente ou translucide, comportant au moins un colorant. Le colorant peut être luminescent, notamment fluorescent ou phosphorescent, et ne présenter cet aspect luminescent de manière visible que sous une excitation dans des longueurs d'ondes du visible ou non.

La couche colorée non opaque peut recouvrir partiellement ou totalement la couche semi-transparente.

Ainsi, lorsque la structure de sécurité comporte un support, la couche semi-transparente peut se situer entre le support et la couche colorée non opaque.

Lorsque la structure de sécurité comporte un autre élément de sécurité tel que décrit précédemment, la couche colorée non opaque peut se superposer partiellement ou totalement audit autre élément, notamment totalement.

L'effet goniochromatique de la couche semi-transparente peut ainsi être conservé et la couleur qui en résulte modifiée, par synthèse additive des couleurs des particules goniochromatiques et du colorant de la couche colorée non opaque.

Etant donné la semi-transparence de la couche comportant les particules métalliques goniochromatiques, la couleur de la structure de sécurité est donnée en transmission par le colorant de la couche colorée non opaque.

Lorsque la structure de sécurité comporte un autre élément de sécurité tel que décrit précédemment, notamment masqué par la couche semi-transparente en réflexion, la couche colorée non opaque permet de colorer en transmission ledit autre élément de sécurité.

En variante, la couche colorée non opaque peut se situer entre la couche semi-transparente et le support, lorsque la structure de sécurité comporte un support.

Dans une autre variante, la couche colorée non opaque peut se situer du côté opposé à la couche semi-transparente par rapport au support.

La structure selon l'invention peut comporter une couche colorée opaque comportant au moins un colorant.

La couche colorée opaque peut recouvrir partiellement la couche semi-transparente.

La structure selon l'invention peut comporter au moins deux couches colorées, comportant au moins chacune un colorant, notamment une première couche colorée et une seconde couche colorée. Chacune des couches colorées peut présenter une ou plusieurs caractéristiques telles que décrites précédemment.

Les colorants de chacune des couches colorées peuvent présenter la même couleur ou des couleurs différentes, notamment des couleurs différentes.

La première couche colorée peut recouvrir totalement ou partiellement la couche semi-transparente.

La couche semi-transparente peut recouvrir totalement ou partiellement la seconde couche colorée.

En particulier, la première et la seconde couche colorée peuvent être des couches colorées non opaques, notamment transparentes ou translucides. La première couche colorée peut recouvrir partiellement la couche semi-transparente. La seconde couche colorée peut être déposée sous la couche semi-transparente, totalement ou partiellement, notamment totalement. Les couleurs des colorants des première et seconde couches peuvent être différentes. On peut ainsi visualiser en réflexion un effet goniochromatique à la fois dans la ou les zones dépourvues de la première couche colorée et dans la ou les zones pourvues de la première couche colorée, la couleur résultante dans cette ou ces dernières zones étant modifiée par synthèse additive des couleurs des particules goniochromatiques et du colorant de la première couche colorée. En transmission, la ou les zones dépourvues de la première couche colorée apparaissent avec la couleur du colorant de la seconde couche et la ou les zones pourvues de la première couche colorée apparaissent avec une couleur résultant de la synthèse additive des couleurs des colorants des première et seconde couches colorées.

En variante, la première couche colorée peut être opaque, notamment pigmentaire, et la seconde couche colorée non opaque, notamment transparente ou translucide. La première couche colorée peut recouvrir partiellement la couche semi-transparente. La seconde couche colorée peut être déposée sous la couche semi-transparente, totalement ou partiellement, notamment totalement. Les couleurs des colorants des première et seconde couches peuvent être différentes. On peut ainsi visualiser en réflexion un effet goniochromatique uniquement dans la ou les zones dépourvues de la première couche colorée, la première couche colorée bloquant la visualisation de l'effet goniochromatique en réflexion. En transmission, un motif apparaît en négatif avec la couleur du colorant de la seconde couche colorée dans la ou les zones dépourvues de la première couche colorée. Le motif apparaissant en négatif peut être de type Cleartext® ou une image tramée conférant une impression de relief.

### Article sécurisé

L'invention a encore pour objet un article sécurisé, selon la revendication 10, comportant une structure selon l'invention, cet article étant de préférence un élément de sécurité ou un document sécurisé.

La structure selon l'invention peut se présenter sous forme de patch, de fil de sécurité ou de revêtement de couchage déposé sur un substrat papetier, papier synthétique , polymère ou hybride papier-synthétique

De préférence, la structure selon l'invention se superpose à une autre structure de sécurité de l'article, notamment une impression ou un motif formé par métallisation ou démétallisation, qui est visible en lumière transmise à travers la couche semi-transparente. Cette autre structure de sécurité peut également être une structure selon l'invention, comportant une couche semi-transparente. Dans ce cas, l'article peut comporter, entre les deux couches semi-transparentes, un ou plusieurs autres éléments de sécurité, par exemple un motif visible en lumière transmise, ce motif étant par exemple formé par une impression.

La structure selon l'invention peut laisser, suite par exemple à une modification au laser ou chimique des particules selon l'invention de la couche semi-transparente, apparaître un motif formé au sein de la couche semi transparente lorsque l'article est observé à l'œil nu en lumière réfléchie d'un côté, par exemple le recto, ce motif étant non perceptible à l'œil nu lorsque l'article est observé en lumière transmise. L'application de la modification laser ou chimique à la couche semi-transparente est adaptée en durée et en intensité, de façon à de préférence ne pas aboutir à une dé-métallisation complète de la couche et donc à un motif qui serait également visible en transmission.

L'article, notamment lorsqu'il constitue une carte, peut comporter une structure de cœur et au moins une couche additionnelle recouvrant au moins partiellement la structure de cœur, présentant au moins un ajour, la structure de sécurité selon l'invention étant disposée dans cet ajour. La couche additionnelle peut être en matière plastique.

L'article peut comporter deux couches additionnelles de part et d'autre de la structure de cœur, la couche additionnelle située à l'opposé de celle présentant l'ajour recevant la structure selon l'invention comportant également un ajour. Ce dernier peut recevoir un patch présentant un motif, notamment réalisé par impression, visible en lumière transmise à travers la structure selon l'invention, les ajours se superposant de préférence exactement.

L'article, notamment lorsqu'il présente deux couches additionnelles présentant chacune un ajour, peut comporter deux structures selon l'invention, disposées chacune dans un ajour. En particulier, chaque ajour peut recevoir un patch portant sur une face une couche semi-transparente selon l'invention. Le patch situé côté recto peut être revêtu sur sa face recto par la couche semi-transparente selon l'invention et le patch situé côté verso peut être revêtu sur sa face verso par la couche semi-transparente selon l'invention.

L'article selon l'invention peut constituer un passeport, une carte d'identité, un permis de conduire, une carte à jouer ou à collectionner interactive, une carte de paiement ou un autre moyen de paiement, un bon d'achat ou un voucher, une carte d'accès, une étiquette sécurisée, une carte de transport, une carte de fidélité, une carte de prestation ou une carte d'abonnement, ou un moyen de paiement spécifique tel d'un jeton ou une plaquette notamment utilisés dans les casinos.

L'article peut comporter une structure de cœur et de part et d'autre de la structure de cœur deux couches semi-transparentes selon l'invention, se superposant de préférence au moins partiellement, les particules selon l'invention des deux couches étant les mêmes ou les particules étant différentes, chacune des couches semi-transparentes comportant de préférence un marquage laser, les marques formées par laser étant identiques ou différentes, notamment correspondant à deux vues différentes d'un même objet ou d'une même personne.

La structure de cœur peut porter une image se superposant au moins partiellement à chacune des couches semi-transparentes.

L'article peut comporter une structure de cœur ajourée, avec dans un ajour de la structure de cœur, un insert portant une couche semi-transparente selon l'invention.

L'insert peut porter sur une face la couche semi-transparente et sur une face opposée une image se superposant au moins partiellement à la couche semi-transparente.

Dans un exemple de mise en œuvre de l'invention, l'article comporte une structure de cœur ajourée, avec dans un ajour de la structure de cœur, un insert portant deux couches semi-transparentes selon l'invention, se superposant de préférence au moins partiellement, lesdites particules selon l'invention des deux couches étant les mêmes ou les dites particules étant différentes, chacune des couches semi-transparentes comportant de préférence un marquage laser, les marques formées par laser étant identiques ou différentes, notamment correspondant à deux vues différentes d'un même objet ou d'une même personne. La structure de cœur peut porter une image se superposant au moins partiellement à chacune des couches semi-transparentes.

Dans le cas où l'article est une carte, celle-ci peut respecter les normes ISO 7810 et/ou 10373.

L'invention pourra être mieux comprise à la lecture de la description détaillée qui va suivre, d'exemples non limitatifs de mise en œuvre de l'invention, et à l'examen du dessin annexé, sur lequel :
- la figure 1 représente en coupe, de façon schématique et partielle, un exemple de structure selon l'invention,
- la figure 2 est une photographie représentant isolément en coupe la couche semi-transparente dans un exemple de mise en œuvre de l'invention,
- les figures 3A et 3B illustrent différentes structures de particules pouvant convenir à l'invention,
- la figure 4 est une vue analogue à la figure 1 d'une variante de structure selon l'invention,
- les figures 5 à 7 illustrent la variation d'aspect de la structure à l'observation selon les directions V à VII des figures 5 à 7 respectivement,
- les figures 8A à 8H illustrent d'autres structures selon l'invention,
- les figures 9A à 9D représentent, en coupe, des exemples d'articles incorporant des structures selon l'invention,
- la figure 10 est une vue analogue à la figure 1 d'une variante de structure selon l'invention,
- la figure 11 est une vue analogue à la figure 4 d'une variante de structure selon l'invention,
- la figure 12 est une vue analogue à la figure 1 d'une variante de structure selon l'invention.

Sur les figures, les proportions réelles des différentes couches et éléments constitutifs n'ont pas toujours été respectées, dans un souci de clarté. Certaines couches peuvent avoir été représentées de façon monolithique dans un souci de simplification, alors qu'elles peuvent être constituées de plusieurs sous-couches en réalité. De même, les couches constitutives n'ont pas été représentées assemblées sur certaines figures.

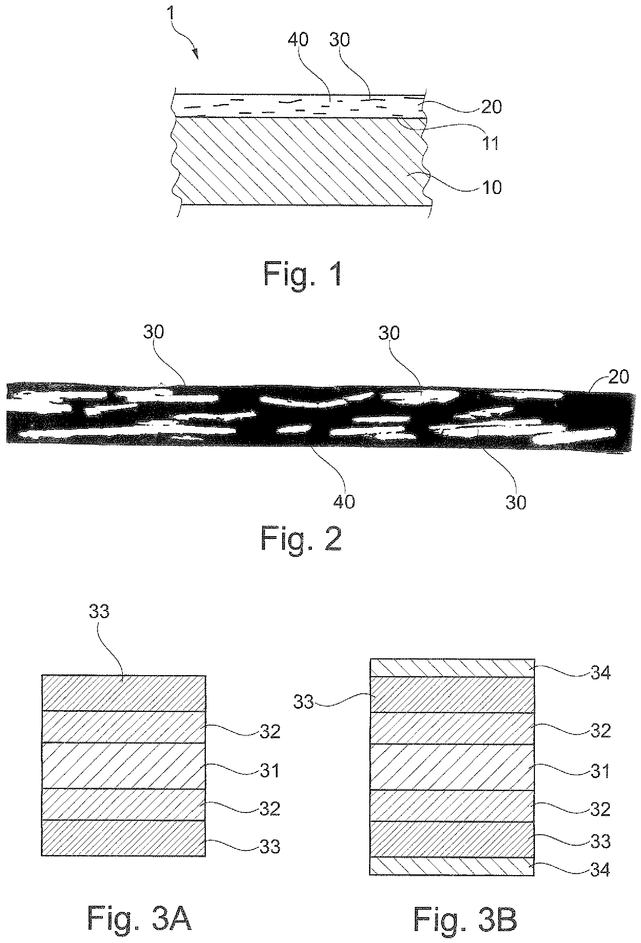

La structure de sécurité 1 représentée à la figure 1 comporte un support 10 portant une couche semi-transparente 20 selon l'invention, contenant des particules 30 selon l'invention maintenues par un liant 40 à la surface du support 10.

Comme on peut le voir sur la figure 2, les particules 30 sont relativement peu nombreuses, et ne rendent pas la couche 20 complètement opaque. L'épaisseur de la couche 20 correspondant à la photographie de la figure 2 est de 12 µm, pour une longueur de 120 µm.

Les particules 30 selon l'invention peuvent présenter l'une des structures illustrées aux figures 3A et 3B.

Sur ces figures, on voit que les particules comportent un cœur 31 de forme plaquettaire. Ce cœur 31 est ici métallique, de préférence en aluminium. Il est recouvert par une première couche 32 d'un matériau diélectrique et par une deuxième couche 33 d'un matériau absorbant. Dans l'exemple de la figure 3B, les particules comportent également une troisième et dernière couche 34.

La première couche 32 est de préférence une couche de métal, par exemple du silicium.

La deuxième couche 33 est de préférence une couche d'un métal ou d'un oxyde métallique ayant un indice de réfraction élevé, encore appelé matériau HRI, par exemple de la silice SiO₂.

La troisième couche 34 est de préférence métallique, par exemple du chrome.

Les épaisseurs des différentes couches et leurs constituants sont choisis de façon à obtenir le changement de couleur avec l'angle d'observation recherché.

Des exemples de structures pouvant convenir sont Cr/SiO₂/Si/Al/Si/SiO₂/Cr ou Cr/SiO₂/Al/SiO₂/Cr. L'épaisseur du cœur en aluminium est par exemple de 400 Å. Le brevet US 6,686,042 décrit des exemples de valeurs des différentes couches minces pour de telles structures.

Une seule et même structure de particules peut être utilisée au sein de la couche semi-transparente 20. En variante, un mélange de particules de même structure mais aux propriétés goniochromatiques différentes peut être utilisé, et dans ce cas, la teneur totale en particules selon l'invention est choisie de façon à obtenir le résultat recherché.

D'autres composés peuvent être ajoutés à la couche 20, par exemple des pigments non opaques, des colorants fluorescents, des Pigments à effet Stokes, ou à effet Anti-stokes, entre autres améliorant ainsi la sécurisation sans modifier outre mesure les effets apportés par la structure selon l'invention.

Le support 10 peut être de tout type.

Il peut notamment être en matière thermoplastique, étant par exemple un film de PET (polyéthylène téréphtalate) ou de PC (polycarbonate).

Le support 10 peut présenter une structure monocouche ou multicouche.

La couche 20 peut être déposée sur le support 10 par une technique d'impression, sous la forme d'une couche continue recouvrant toute la surface d'une face 11 du support 10 ou de façon non uniforme pour faire apparaître un motif.

De préférence, la couche 20 est continue et recouvre toute la face du support 10.

La couche 20 peut être personnalisée en réalisant une modification sélective de la structure des particules selon l'invention au sein de la couche, de façon à changer localement ses propriétés optiques.

De préférence, cette modification s'effectue par laser, en modifiant la phase cristalline du métal des particules selon l'invention pour la rendre amorphe, donc plus transparente. Cette conversion peut se faire grâce à un laser de type Nd YAG qui génère une température ponctuellement très élevée engendrant la vitrification du métal au point d'impact. Le laser se déplaçant, le métal retourne à la température ambiante de manière quasi-instantanée, permettant de figer le métal dans l'état amorphe ou partiellement amorphe.

On peut, notamment en ce qui concerne cette technique, se référer à la publication : Régimes d'amorphisation de surface des métaux lors d'un traitement continu par balayage au laserMetal Fizika i himiâ obrabotki materialov ISSN 0015 3214, 1984, n°3, pp. 25-32 (12 réf.), KLEBANOV YU.D ;

En variante, la personnalisation s'effectue par attaque chimique sélective. Dans ce cas, le liant peut être dégradé ponctuellement.

Ainsi, la couche 20 peut être rendue d'aspect différent par endroits, notamment plus transparente ou réfléchissant autrement la lumière, ce qui permet d'inscrire des données variables, par exemple liées au titulaire du document sécurisé incorporant la structure 1 selon l'invention, par exemple sa photographie ou son nom.

De préférence, la modification de la structure 1 s'effectue sans lui faire perdre totalement son caractère semi-transparent, en n'affectant pas la totalité des particules selon l'invention de la zone dont on cherche à modifier l'aspect, au point de leur faire perdre à toutes leur pouvoir réfléchissant et/ou opacifiant.

Une structure de sécurité 1 selon l'invention peut se superposer à une autre structure de sécurité, par exemple un motif formé par impression, enduction, couchage, métallisation ou dé-métallisation, marquage laser (carbonisation) par exemple dans une couche en polycarbonate présente ailleurs, sur le support ou sur l'article incorporant la structure selon l'invention.

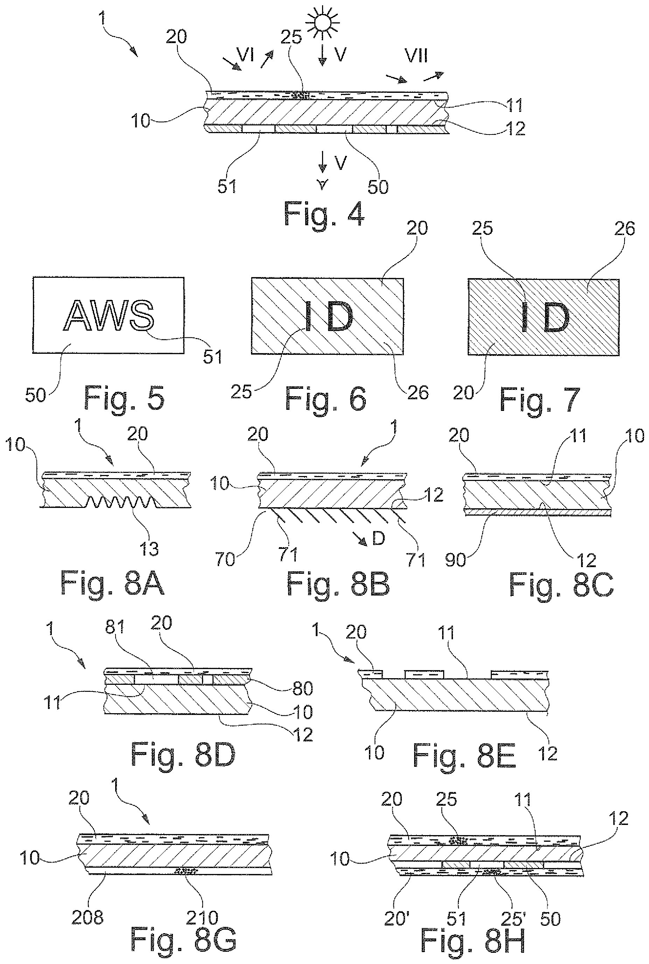

A titre d'exemple, on a représenté à la figure 4 une structure de sécurité 1 qui comporte sur la face 12 du support 10 opposée à la couche semi-transparente 20 une couche 50 d'opacité variable, par exemple formée d'une couche de métal partiellement dé-métallisée ou une couche en polycarbonate marquée au laser pour faire apparaître un motif, par exemple en négatif du fait de la présence d'ajours 51.

Les ajours 51 peuvent se situer, le cas échéant, de façon repérée par rapport à au moins un motif 25 formé par modification, notamment laser de la couche semi-transparente 20.

Sur les figures 5 à 7, on a illustré un exemple de changement d'aspect pouvant être perçu à l'observation d'une structure selon l'invention, telle qu'illustrée à la figure 4, comportant d'un côté du support 10 une couche semi-transparente 20 dans laquelle a été formé par modification laser un motif 25, par exemple les lettres ID, et de l'autre côté un motif 51, par exemple les lettres AWS en écriture négative ou positive.

Lorsque la structure est observée en lumière transmise, selon V de la figure 4, en éclairant du côté de la couche 20 et en observant à travers la structure 1 du côté de la couche 50, le motif 25 n'est pas visible, la couche 20 présentant un aspect par exemple gris uniforme. Le motif 51 formé dans la couche 50 apparaît. Le résultat observé est sensiblement le même lorsque la structure est observée en lumière transmise, selon V de la figure 4, en éclairant du côté de la face 12 et en observant à travers la structure 1 du côté de la couche 20.

En observation en lumière réfléchie de la couche 20 côté recto sous l'incidence VI, comme sur la figure 6, les lettres ID apparaissent en écriture négative au sein d'un aplat coloré 26 ayant une certaine couleur. Quand l'angle d'incidence change et passe à l'incidence VII, la couleur de l'aplat 26 change, le motif 25 restant visible.

Quand la structure est observée en réflexion du côté verso, le motif 25 n'est pas visible et seul le motif 51 l'est éventuellement.

On peut superposer au moins partiellement la couche semi-transparente 20 selon l'invention avec diverses autres structures en fonction des effets recherchés.

Sur la figure 8A, on a illustré la possibilité de superposer au moins partiellement la couche semi-transparente 20 selon l'invention avec un filigrane 13 réalisé sur le support 10. Le filigrane 13 reste visible en lumière transmise, du fait de la non opacité de la couche 20. La couche semi-transparente 20 peut être appliquée de façon repérée par rapport à un motif du filigrane 13.

On a illustré sur la figure 8B la possibilité de superposer la structure 1 selon l'invention avec une couche 70 de particules plaquettaires 71 orientées sensiblement selon une même direction D, non parallèle à la face 12 du support 10. Selon l'angle d'observation, on peut voir ou non entre les particules 71.

Sur la figure 8C, la structure 1 comporte sur la face 12 du support 10 opposée à la couche semi-transparente 20 une couche luminescente 90 sous UV ou IR, qui peut comporter un motif visible en lumière transmise sous éclairage UV ou IR.

Sur la figure 8D, la couche semi-transparente 20 selon l'invention recouvre une couche intermédiaire 80, située entre le support 10 et la couche 20. Cette couche intermédiaire 80 est par exemple une couche d'opacité variable, notamment une couche partiellement dé-métallisée, de façon à faire apparaître un motif 81 en lumière transmise.

Sur la figure 8E, on a illustré la possibilité de déposer la couche 20 de façon non uniforme sur le support 10, par exemple pour former un motif. Ce dernier peut être disposé de façon repérée par rapport à un autre élément de sécurité, non représenté.

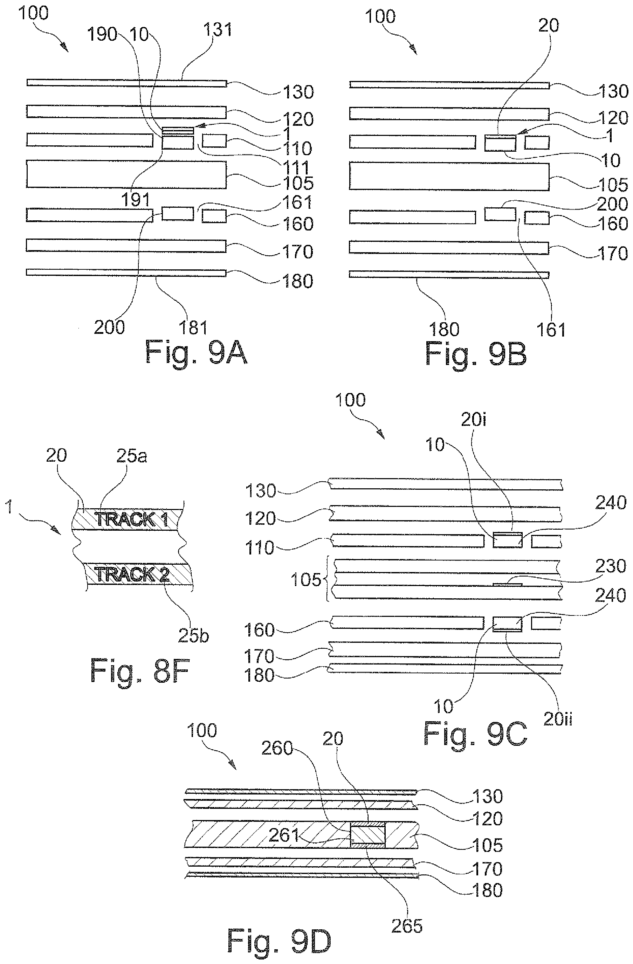

La figure 8F illustre la possibilité de le faire sous la forme de deux pistes parallèles espacées sur un support 10 en bande. Chacune des pistes peut comporter une succession de motifs 25a et 25b formés par modification de la couche semi-transparente, notamment par laser. Les motifs 25a ou 25b peuvent se succéder au sein d'une piste avec un écartement constant ou au contraire variable. Ces motifs peuvent présenter un aspect goniochromatique différent, lié par exemple à l'emploi de particules selon l'invention différentes au sein des pistes.

La figure 8G représente une structure 1 dans laquelle la couche semi-transparente 20 selon l'invention se superpose à une couche 208 marquable par laser. La couche 208 est par exemple en polycarbonate. La référence 210 désigne un élément de sécurité constitué par un marquage laser au sein de la couche 208. La marque 210 peut être visible en transmission du côté recto et visible en transmission et en réflexion côté verso. La couche semi-transparente 20 s'oppose à une visibilité en réflexion du côté recto de la marque 210.

La figure 8H illustre une réalisation qui diffère de celle représentée à la figure 4 par la présence d'une deuxième couche semi-transparente 20' au verso, recouvrant la couche 50 d'opacité variable. La couche semi-transparente 20' peut avoir la même composition que la couche 20 et présenter un motif 25' formé par laser. De préférence, ce dernier est situé au droit d'un ajour 51, et ne se superpose pas au motif 25.

Le ou les ajours 51 ne sont visibles qu'en lumière transmise, que ce soit du recto ou du verso. Le motif 25' n'est visible qu'en réflexion du verso et le motif 25 qu'en réflexion du recto.

Les motifs 25 et 25' peuvent être identiques ou différents.

Les particules selon l'invention des couches 20 et 20' peuvent être identiques ou différentes, notamment présenter des trajets de couleur différents lorsque l'angle d'observation varie.

La couche 50 d'opacité variable est par exemple une couche de métal partiellement démétallisée pour former le ou les ajours 51. En variante, il peut s'agir d'une impression, ou d'un marquage laser.

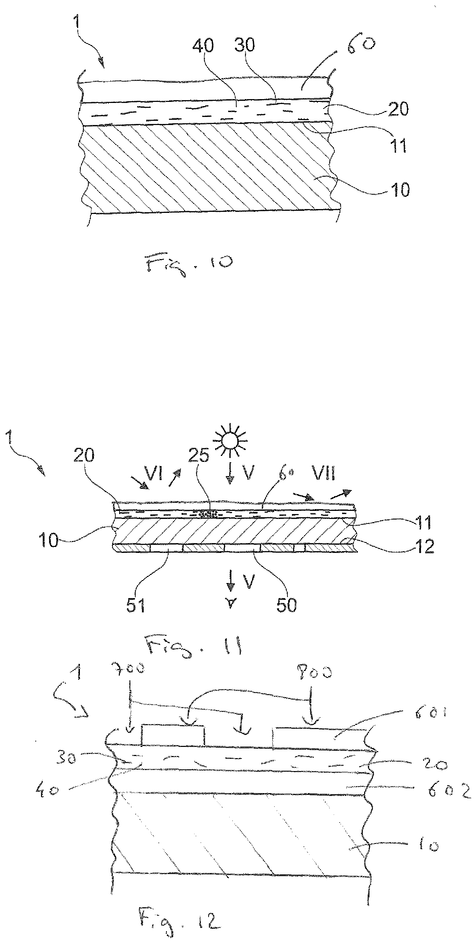

Les figures 10 et 11 représentent chacune une structure 1 dans laquelle la couche semi-transparente 20 est recouverte par une couche 60 colorée non opaque, notamment transparente ou translucide, comportant un colorant.

La couleur de la structure 1 est donnée en transmission par le colorant et en réflexion par synthèse additive des couleurs des particules 30 et du colorant.

La figure 11 correspond à la figure 4 dans laquelle la structure 1 comporte une couche 60 colorée non opaque, comportant un colorant, recouvrant la couche semi-transparente 20. La couche colorée 60 non opaque permet en transmission de colorer les ajours 51.

La figure 12 représente une structure 1 comportant une première couche colorée 601, comportant un colorant, recouvrant partiellement la couche semi-transparente 20 et une seconde couche colorée 602, comportant un colorant de couleur différente par rapport au colorant de la première couche colorée 601. La seconde couche colorée 602 est déposée sous la couche semi-transparente 20, qui la recouvre totalement.

La seconde couche colorée 602 est non opaque, notamment transparente ou translucide.

La première couche colorée 601 est dans une première variante non opaque, notamment transparente ou translucide. Ainsi on visualise en réflexion un effet goniochromatique à la fois dans les zones 700 dépourvues de la première couche colorée 601 et dans les zones 800 pourvues de la première couche colorée 601, la couleur résultante dans ces dernières zones étant modifiée par synthèse additive des couleurs des particules goniochromatiques et du colorant de la première couche colorée 601. En transmission, les zones 700 dépourvues de la première couche colorée 601 apparaissent avec la couleur du colorant de la seconde couche 602 et les zones pourvues de la première couche colorée 601 apparaissent avec une couleur résultant de la synthèse additive des couleurs des colorants des première et seconde couches colorées 601 et 602.

En variante, la première couche colorée est opaque, notamment pigmentaire. Ainsi on visualise en réflexion un effet goniochromatique uniquement dans les zones 700 dépourvues de la première couche colorée 601, la première couche colorée 601 bloquant la visualisation de l'effet goniochromatique en réflexion. En transmission, un motif apparaît en négatif avec la couleur du colorant de la seconde couche colorée 602 dans les zones dépourvues de la première couche colorée 601.

On va maintenant décrire, en se référant à la figure 9A, un exemple d'article de sécurité 100 incorporant une structure de sécurité 1 selon l'invention.

Cet article 100 est par exemple une carte d'identité sécurisée, comportant une structure de cœur 105, au moins partiellement transparente, notamment dans une zone se superposant avec la structure de sécurité 1. Cette structure de cœur 105 peut accueillir une puce et une antenne permettant de communiquer sans contact et/ou avec contact, non représentées, dans son épaisseur.

La structure de cœur 105 est recouverte supérieurement par une couche 110 pourvue d'un ajour 111, par une couche additionnelle 120 et par une couche de surface 130 qui définit la face recto 131.

La structure de cœur 105 peut être fibreuse ou non, de préférence en polycarbonate. Plus généralement, la structure du cœur peut être de composition quelconque, notamment en papier, couché ou non, en matière plastique, papier synthétique ou un mélange de ces trois types de matériaux, le cœur de la structure pouvant être multicouche ou monocouche.

La structure de cœur 105 peut être un inlay réalisé comme divulgué dans la demande FR 2 963 275 pages 17 et 18 ou une structure monocouche telle que divulguée dans la demande WO 2011/135497.

Une couche 160 pourvue d'un ajour 161 recouvre la structure de cœur 105 du côté opposé, cette couche 160 étant elle-même recouverte par une couche additionnelle 170 et par une couche de surface 180 définissant la face verso 181.

Les ajours 111 et 161 se superposent au moins partiellement, mieux exactement.

Les couches de surface 130 et 180 sont par exemple des couches en PC transparentes, d'épaisseur de 50 microns environ.

Les couches additionnelles sous-jacentes 120 et 170 sont par exemple des couches de PC plus épaisses, transparentes, de 100 microns d'épaisseur.

Les couches ajourées 110 et 160 sont par exemple en PC blanc, de 100 microns environ d'épaisseur.

Les ajours 111 et 161 reçoivent des patchs respectifs 190 et 200.

Le patch 190 constitue une structure de sécurité 1 selon l'invention, comportant un support 10 recouvert d'une couche semi-transparente 20, le support étant lui-même porté par une couche 191 en PC transparent, par exemple de 100 microns d'épaisseur. Ce support est par exemple un film de PET. Alternativement la structure de sécurité 1 peut être directement déposée sur le patch 190 par impression, couchage, enduction ou autre.

Le patch 200 est par exemple une couche de PC transparent de 100 microns qui est imprimée.

La couche 20 est personnalisée par laser, pour y former un motif visible en lumière réfléchie.

Lorsque l'on observe la carte côté recto en lumière réfléchie, on peut voir l'effet de changement de couleur de la couche 20 en fonction de l'angle d'observation, ainsi que le motif réalisé par personnalisation laser de la couche 20.

Lorsque la carte est observée en réflexion côté verso, on voit l'image imprimée sur le patch 200. En lumière transmise, côté verso ou recto, on ne voit pas le motif formé par personnalisation laser au sein de la couche 20. Seul le motif réalisé par impression sur le patch 200 est visible.

Dans ces exemples, la couche semi-transparente 20 est par exemple réalisée avec 40% de particules selon l'invention en poids sec par rapport au pourcentage de liant PU sec. La couche est appliquée en impression par sérigraphie par exemple sous la forme d'un revêtement de 10 µm d'épaisseur, sur le support 10 ou directement sur le patch 190 [

Dans une variante, la concentration en poids sec en particules selon l'invention est de 30% et le support de la couche semi-transparente 20 est un papier filigrané ou un fil à motifs formés par démétallisation.

Comme illustré sur la figure 9B, la couche 20 peut, selon une variante de la réalisation de la figure 9A, être déposée directement sur le patch en PC, qui constitue le support 10.

La figure 9C représente une variante d'article 100 qui offre la possibilité de réaliser une personnalisation sur chaque face du document, par exemple par modification laser de la couche semi-transparente selon l'invention.

Une image 230 peut être réalisée par impression, par exemple offset, sur l'une des couches formant la structure de cœur 105, cette image se retrouvant par exemple à l'intérieur de la structure de cœur 105.

De part et d'autre et en regard de cette image 230 sont disposées symétriquement par rapport au cœur des patchs 240 comportant chacun une structure selon l'invention, avec des couches semi-transparentes 20i et 20ii, respectivement sur le recto et sur le verso d'un support 10. Les particules selon l'invention des couches 20i et 20ii peuvent être identiques ou différentes selon l'effet souhaité, notamment selon que l'on recherche une couleur identique ou différente selon la face observée de l'article. Une personnalisation via modification laser peut aussi être réalisée, comme par exemple la formation d'une image représentant le porteur du document de face sur la couche 20i et représentant le porteur du document de profil sur la couche 20ii.

La figure 9D représente une variante d'article 100 comportant une structure de cœur 105, par exemple de 480 µm d'épaisseur, pourvue d'un ajour 260 dans lequel est disposé un insert 261 transparent, par exemple en polycarbonate. Cet insert 261 présente de préférence une épaisseur inférieure à celle de la structure 105 autour de l'ajour 260. L'insert 261 porte au recto une couche semi-réfléchissante 20 selon l'invention, et au verso une image 265. L'épaisseur de l'insert 261 ainsi revêtu correspond sensiblement à celle de la structure 105 autour de l'ajour 260.

La couche semi-transparente 20 est visible en réflexion au recto de l'article 100 et l'image 265 est visible en réflexion au verso. La composition constituant la couche 20 peut être couchée directement sur le matériau de l'insert 261.

La structure 1 de l'exemple de la figure 8G peut être intégrée dans un article multicouche tel que décrit en référence aux figures 9A, 9B ou 9D notamment.

L'article ou la structure selon l'invention peut également comporter un ou plusieurs éléments de sécurité supplémentaires.

Parmi les éléments de sécurité supplémentaires pouvant être intégrés à un article ou à une structure selon l'invention, certains sont de premier niveau, étant détectables à l'œil nu, en lumière du jour ou en lumière artificielle, sans utilisation d'un appareil particulier, étant visibles depuis un côté de la structure ou à travers la fenêtre si la deuxième couche est non opaque. Ces éléments de sécurité comportent par exemple des fibres ou planchettes colorées ou luminescentes, des planchettes métalliques, des fils imprimés ou métallisés totalement ou partiellement.

L'article ou la structure selon l'invention peut également comporter d'autres types d'éléments de sécurité de deuxième niveau, détectables à l'aide d'un appareil relativement simple, tel qu'une lampe émettant dans l'ultraviolet ou l'infrarouge. Ces éléments de sécurité comportent par exemple des fibres, des planchettes, des bandes, des fils ou des particules. Ces éléments de sécurité peuvent être visibles à l'œil nu ou non, étant par exemple luminescents sous l'éclairage d'une lampe de Wood émettant à la longueur d'onde de 365 nm.

D'autres types d'éléments de sécurité sont de troisième niveau et nécessitent pour leur détection un appareil de détection plus sophistiqué. Ces éléments de sécurité sont par exemple capables de générer un signal spécifique lorsqu'ils sont soumis, de manière simultanée ou non, à une ou plusieurs sources d'excitation extérieure. La détection automatique du signal permet d'authentifier, le cas échéant, la structure ou l'article. Ces éléments de sécurité comportent par exemple des traceurs se présentant sous la forme de matière active, de particules ou de fibres, capables de générer un signal spécifique lorsque ces traceurs sont soumis à une excitation optronique, électrique, magnétique ou électromagnétique.

L'article ou la structure peut en particulier comporter comme éléments de sécurité, entre autres, selon les cas :
- des colorants et/ou des pigments luminescents et/ou des pigments interférentiels et/ou des pigments à cristaux liquides, notamment sous forme imprimée,
- des colorants et/ou des pigments photochromes ou thermochromes, notamment sous forme imprimée,
- un absorbeur ultraviolet (UV), notamment sous forme enduite ou mélangée au liant de la couche semi-transparente,
- un matériau spécifique collecteur de lumière, par exemple du type « guide d'ondes », par exemple un matériau collecteur de lumière luminescent comme les films polymères à base de polycarbonate commercialisés par la société BAYER sous la dénomination LISA®,
- un film multicouche interférentiel,
- une structure à effets optiques variables à base de pigments interférentiels ou de cristaux liquides,
- une couche biréfringente ou polarisante,
- une structure de diffraction,
- une image embossée,
- des moyens produisant un "effet de moiré", un tel effet pouvant par exemple faire apparaître un motif produit par la superposition de deux éléments de sécurité à l'intérieur de l'article, par exemple par le rapprochement de lignes de deux éléments de sécurité,
- un élément réfractif partiellement réfléchissant,
- une grille lenticulaire transparente,
- une lentille, par exemple une loupe,
- un filtre coloré,
- un élément de sécurité plat et de format relativement petit tel qu'une planchette, visible ou non visible, notamment luminescent,
- des particules ou agglomérats de particules, de pigments ou colorants de type HI-LITE, visibles ou non visibles, notamment luminescents,
- des fibres de sécurité, notamment métalliques, magnétiques (à magnétisme doux et/ou dur), ou absorbantes, ou excitables aux ultraviolets, le visible ou l'infrarouge, et en particulier le proche infrarouge (NIR),
- une sécurité lisible automatiquement ayant des caractéristiques spécifiques et mesurables de luminescence (par exemple fluorescence, phosphorescence), d'absorption de la lumière (par exemple ultraviolet, visible ou infrarouge), d'activité Raman, de magnétisme, d'interaction micro-ondes, d'interaction aux rayons X ou de conductivité électrique.

Un ou plusieurs éléments de sécurité tels que définis plus haut peuvent être intégrés directement dans le liant de la couche semi-réfléchissante lorsque cela est possible ou à l'article selon l'invention ou compris dans un ou plusieurs éléments de sécurité incorporés à l'article, comme par exemple un fil, un foil ou un patch.

Un ou plusieurs éléments de sécurité tels que définis plus haut peuvent être incorporés, notamment dispersés en masse, dans au moins l'une des couches de la structure selon l'invention, notamment le support de la couche semi-transparente.

La structure ou l'article selon l'invention peut également comporter un ou plusieurs éléments de sécurité dits « d'infalsification », comme par exemple des réactifs aux produits chimiques, par exemple capables de provoquer une réaction colorée en présence de produits chimiques spécifiques, par exemple des produits chimiques utilisés par les fraudeurs.

L'invention n'est pas limitée aux exemples qui viennent d'être décrits. On peut apporter diverses modifications aux exemples illustrés sans sortir du cadre de la présente invention, telle que définie dans les revendications qui suivent.

En particulier, les caractéristiques des différents exemples de réalisation illustrés peuvent se combiner au sein de variantes non illustrées. Par exemple, les couches 130, 120, 170 et 180 des exemples des figures 9A à 9D peuvent être remplacées par une couche unique, de structure homogène ou non, ou absentes.

L'expression «comportant un » est synonyme de « comportant au moins un », sauf si le contraire est précisé.

## Revendications

1. Structure de sécurité (1), comportant une couche semi-transparente (20) contenant un liant (40) et au moins des particules métalliques goniochromatiques, présentes au sein du liant dans une concentration conférant à la couche sa semi-transparence, et réfléchissant la lumière incidente sans laisser passer une partie de la lumière incidente de couleur complémentaire à celle qu'elles réfléchissent de sorte à obtenir un effet goniochromatique en réflexion et une transparence sensiblement incolore en transmission.

2. Structure selon la revendication 1, lesdites particules (30) étant de forme plaquettaire et/ou lesdites particules comportant un cœur métallique (31), de préférence en aluminium et/ou lesdites particules étant orientées sensiblement à plat au sein du liant et/ou lesdites particules étant présentes au sein du liant sous la forme d'une monocouche.

3. Structure selon l'une quelconque des revendications précédentes, la couche semi-transparente (20) étant portée par un support (10) comportant un film en matière thermoplastique et/ou une couche fibreuse notamment en papier, l'épaisseur de la couche semi-transparente (20) étant de préférence comprise entre 2 et 50 microns, mieux entre 5 et 15 microns.

4. Structure selon l'une quelconque des revendications précédentes, la taille moyenne desdites particules (30) étant comprise entre 10 et 50 microns, la concentration en poids sec desdites particules au sein de la couche (20) étant de préférence comprise entre 5 et 50%, par rapport au poids total liant et particules (30), mieux entre 15 et 45% et le volume occupé par lesdites particules au sein de la couche semi-transparente étant de préférence compris entre 5 et 80%, mieux entre 20 et 50%, par rapport au volume total de la couche.

5. Structure selon l'une quelconque des revendications précédentes, au moins un autre élément de sécurité (50) se superposant au moins partiellement à la couche semi-transparente (20), notamment un élément de sécurité métallisé, démétallisé, imprimé, enduit couché, marqué au laser ou un filigrane.

6. Structure selon l'une quelconque des revendications précédentes, la couche semi-transparente (20) étant personnalisée de manière à faire apparaitre un motif (25) en lumière réfléchie, la couche semi-transparente n'étant de préférence pas totalement transparente dans la zone du motif, ledit motif (25) étant de préférence formé par laser.

7. Structure selon l'une quelconque des revendications précédentes, comportant une couche (208) d'un matériau marquable au laser par carbonisation locale, notamment du polycarbonate, se superposant à la couche semi-transparente (20), la couche marquable par laser comportant de préférence une marque (210) formée par laser, la marque laser se superposant notamment avec un ajour formé par démétallisation d'une couche de métal.

8. Structure selon l'une quelconque des revendications précédentes, comportant deux couches semi-transparentes (20 ;20') telles que définies a la revendication 1, respectivement au recto et au verso d'un support, lesdites particules (30) étant les mêmes dans chacune desdites couches ou étant différentes, l'une au moins desdites couches, mieux chacune desdites couches comportant de préférence une marque (25;25') formée par laser, les marques étant de préférence différentes, notamment correspondant à deux vues d'un même objet ou d'une même personne, les deux marques étant de préférence au moins partiellement superposées, la ou les marques laser se superposant notamment pour au moins l'une d'entre elles, avec un ajour formé par démétallisation d'une couche de métal.

9. Structure selon l'une quelconque des revendications précédentes, comportant une couche colorée non opaque (60), notamment transparente ou translucide, comportant au moins un colorant et recouvrant totalement ou partiellement la couche semi-transparente (20).

10. Article sécurisé (100) comportant une structure (1) selon l'une quelconque des revendications précédentes, notamment un élément de sécurité ou un document sécurisé tel que par exemple un passeport, une carte d'identité, un permis de conduire, une carte à jouer ou à collectionner interactive, un moyen de paiement, notamment une carte de paiement, un billet de banque, un bon d'achat ou un voucher, une étiquette sécurisée, une carte de transport, une carte de fidélité, une carte de prestation, une carte d'abonnement ou un moyen de paiement spécifique tel d'un jeton ou une plaquette notamment utilisés dans les casinos, la structure de sécurité (1) se présentant de préférence sous forme de patch, de fil de sécurité, ou de couchage, notamment déposé sur un substrat papetier, un papier synthétique ou plastique.

11. Article selon la revendication 10, comportant une structure de cœur (105) et au moins une couche additionnelle (110) recouvrant au moins partiellement la structure de cœur, présentant au moins un ajour (111), la structure de sécurité (1) étant disposée dans cet ajour (111), la couche additionnelle (110) étant de préférence en matière plastique.

12. Article selon la revendication 10, comportant deux couches additionnelles (110 ; 160) de part et d'autre de la structure de cœur, la couche additionnelle (160) située à l'opposé de celle présentant l'ajour (111) recevant la structure de sécurité (1) comportant également un ajour (161) qui reçoit un patch (200) présentant un motif, notamment réalisé par impression, visible en lumière transmise à travers la structure de sécurité (1), les ajours (111 ; 161) se superposant de préférence exactement.

13. Article selon l'une quelconque des revendications 10 à 12, comportant une structure de cœur (105) et de part et d'autre de la structure de cœur deux couches semi-transparentes (20;20') telles que définies a la revendication 1, se superposant de préférence au moins partiellement, lesdites particules des deux couches étant les mêmes ou lesdites particules étant différentes, chacune des couches semi-transparentes comportant de préférence un marquage laser (25;25'), les marques formées par laser étant identiques ou différentes, notamment correspondant à deux vues différentes d'un même objet ou d'une même personne, la structure de cœur (105) portant de préférence une image (230) se superposant au moins partiellement à chacune des couches semi-transparentes (20;20').

14. Article selon l'une quelconque des revendications 10 à 12, comportant une structure de cœur (105) ajourée, avec dans un ajour (260) de la structure de cœur (105), un insert (261) portant une couche semi-transparente (20) telle que définie à la revendication 1, l'insert (261) portant notamment sur une face la couche semi-transparente (20) et sur une face opposée une image (265) se superposant au moins partiellement à la couche semi-transparente (20).

15. Article selon l'une quelconque des revendications 10 à 12, comportant une structure de cœur ajourée, avec dans un ajour de la structure de cœur, un insert portant deux couches semi-transparentes telles que définies a la revendication 1, se superposant de préférence au moins partiellement, lesdites particules des deux couches étant les mêmes ou lesdites particules étant différentes, chacune des couches semi-transparentes comportant de préférence un marquage laser, les marques formées par laser étant identiques ou différentes, notamment correspondant à deux vues différentes d'un même objet ou d'une même personne, la structure de cœur portant notamment une image se superposant au moins partiellement à chacune des couches semi-transparentes.

## Patentansprüche

1. Sicherheitsstruktur (1), aufweisend eine halbtransparente Schicht (20), die ein Bindemittel (40) und wenigstens goniochromatische metallische Pigmente enthält, die in dem Bindemittel in einer Konzentration vorhanden sind, die der Schicht ihre Halbtransparenz verleiht, und die das auftreffende Licht reflektieren, ohne einen Teil des auftreffenden Lichts einer zu der von ihnen reflektierten Farbe komplementären Farbe durchzulassen, so dass sich in Reflexion ein goniochromatischer Effekt und in Transmission eine im Wesentlichen farblose Transparenz ergibt.

2. Struktur nach Anspruch 1, wobei die Partikel (30) plättchenförmig sind und/oder die Partikel einen metallischen Kern (31), bevorzugt aus Aluminium, aufweisen und/oder wobei die Partikel in dem Bindemittel im Wesentlichen flach orientiert sind und/oder wobei die Partikel in dem Bindemittel in Form einer einlagigen Schicht vorhanden sind.

3. Struktur nach einem der vorhergehenden Ansprüche, wobei die halbtransparente Schicht (20) von einem Träger (10) getragen wird, der eine Folie aus thermoplastischem Material und/oder eine fasrige Schicht insbesondere aus Papier aufweist, wobei die Dicke der halbtransparenten Schicht (20) bevorzugt zwischen 2 und 50 Mikrometer, besser zwischen 5 und 15 Mikrometer, beträgt.

4. Struktur nach einem der vorhergehenden Ansprüche, wobei die mittlere Größe der Partikel (30) zwischen 10 und 50 Mikrometer beträgt, wobei die Trockengewichtskonzentration der Partikel in der Schicht (20) bevorzugt zwischen 5 und 50 % gegenüber dem Gesamtgewicht Bindemittel und Partikel (30), besser zwischen 15 und 45 %, beträgt und wobei das von den Partikeln in der halbtransparenten Schicht eingenommene Volumen bevorzugt zwischen 5 und 80 %, besser zwischen 20 und 50 %, gegenüber dem Gesamtvolumen der Schicht beträgt.

5. Struktur nach einem der vorhergehenden Ansprüche, wobei wenigstens ein weiteres Sicherheitselement (50) die halbtransparente Schicht (20) wenigstens teilweise überlagert, insbesondere ein metallisiertes, entmetallisiertes, bedrucktes, mit Strichauftrag versehenes, lasermarkiertes Sicherheitselement oder ein Wasserzeichen.

6. Struktur nach einem der vorhergehenden Ansprüche, wobei die halbtransparente Schicht (20) derart individuell angepasst ist, dass im reflektierten Licht ein Muster (25) erscheint, wobei die halbtransparente Schicht in der Zone des Musters bevorzugt nicht vollständig transparent ist, wobei das Muster (25) bevorzugt durch Laser gebildet ist.

7. Struktur nach einem der vorhergehenden Ansprüche, aufweisend eine Schicht (208) aus einem durch lokale Karbonisierung lasermarkierbarem Material, insbesondere Polycarbonat, welche die halbtransparente Schicht (20) überlagert, wobei die lasermarkierbare Schicht bevorzugt eine durch Laser gebildete Markierung (20) aufweist, wobei die Lasermarkierung sich insbesondere mit einem durch Entmetallisierung einer Metallschicht gebildetem Durchbruch überlagert.

8. Struktur nach einem der vorhergehenden Ansprüche, aufweisend zwei halbtransparente Schichten (20; 20') wie in Anspruch 1 definiert, auf der Vorderseite bzw.auf der Rückseite eines Trägers, wobei die Partikel (30) in jeder der Schichten gleich sind oder unterschiedlich sind, wobei wenigstens eine der Schichten, besser jede der Schichten, bevorzugt eine Markierung (25; 25') aufweist, die durch Laser gebildet ist, wobei die Markierungen bevorzugt unterschiedlich sind, insbesondere zwei Ansichten eines selben Objekts oder einer selben Person entsprechen, wobei die zwei Markierungen bevorzugt teilweise überlagert sind, wobei die Lasermarkierung(en) sich insbesondere bei wenigstens einer von ihnen mit einem durch Entmetallisierung einer Metallschicht gebildetem Durchbruch überlagern.

9. Struktur nach einem der vorhergehenden Ansprüche, aufweisend eine farbige, nicht opake Schicht (60), insbesondere transparent oder durchscheinend, die wenigstens einen Farbstoff aufweist und die halbtransparente Schicht (20) vollständig oder teilweise bedeckt.

10. Sicherer Gegenstand (100), aufweisend eine Struktur (1) nach einem der vorhergehenden Ansprüche, insbesondere ein Sicherheitselement oder ein sicheres Dokument, wie zum Beispiel ein Reisepass, ein Personalausweis, ein Führerschein, eine interaktive Spiel- oder Sammlerkarte, ein Zahlungsmittel, insbesondere eine Zahlkarte, eine Banknote, ein Einkaufsgutschein oder ein Voucher, ein sicheres Etikett, ein Fahrausweis, eine Kundenkarte, ein Dienstleistungsausweis, ein Abonnentenausweis oder ein spezifisches Zahlungsmittel wie ein Jeton oder eine Plaque, die insbesondere in Spielkasinos verwendet werden, wobei die Sicherheitsstruktur (1) bevorzugt die Form eines Patch, eines Sicherheitsfadens, oder Beschichtungsfadens, aufweist, der insbesondere auf einem Papiersubstrat, einem Synthetik- oder Kunststoffpapier aufgebracht ist.

11. Gegenstand nach Anspruch 10, aufweisend eine Kernstruktur (105) und wenigstens eine zusätzliche Schicht (110), welche die Kernstruktur wenigstens teilweise bedeckt und die wenigstens einen Durchbruch (111) aufweist, wobei die Sicherheitsstruktur (1) in diesem Durchbruch (111) angeordnet ist, wobei die zusätzliche Schicht (110) bevorzugt aus Kunststoff ist.

12. Gegenstand nach Anspruch 10, aufweisend zwei zusätzliche Schichten (110; 160) auf der einen und der anderen Seite der Kernstruktur, wobei die zusätzliche Schicht (160), die der gegenüberliegt, die den Durchbruch (111) aufweist, der die Sicherheitsstruktur (1) aufnimmt, auch einen Durchbruch (161) aufweist, der einen Patch (200) aufnimmt, der ein Muster aufweist und insbesondere durch Druck realisiert ist und im Licht sichtbar ist, das durch die Sicherheitsstruktur (1) durchgelassen wird, wobei sich die Durchbrüche (111; 161) bevorzugt exakt überlagern.

13. Gegenstand nach einem der Ansprüche 10 bis 12, aufweisend eine Kernstruktur (105) und auf der einen und der anderen Seite der Kernstruktur zwei halbtransparente Schichten (20; 20') wie in Anspruch 1 definiert, die sich bevorzugt wenigstens teilweise überlagern, wobei die Partikel der zwei Schichten die gleichen sind oder die Partikel unterschiedlich sind, wobei jede der halbtransparenten Schichten bevorzugt eine Lasermarkierung (25; 25') aufweist, wobei die durch Laser gebildeten Markierungen identisch oder unterschiedlich sind, insbesondere zwei unterschiedlichen Ansichten eines selben Objekts oder einer selben Person entsprechen, wobei die Kernstruktur (105) bevorzugt ein Bild (230) trägt, das jede der halbtransparenten Schichten (20; 20') wenigstens teilweise überlagert.

14. Gegenstand nach einem der Ansprüche 10 bis 12, aufweisend eine durchbrochene Kernstruktur (105), mit, in einem Durchbruch (260) der Kernstruktur (105), einem Einsatz (261), der eine halbtransparente Schicht (20) wie in Anspruch 1 definiert trägt, wobei der Einsatz (261) insbesondere auf einer Fläche die halbtransparente Schicht (20) und auf einer entgegengesetzten Fläche ein Bild (265) trägt, das die halbtransparente Schicht (20) wenigstens teilweise überlagert.

15. Gegenstand nach einem der Ansprüche 10 bis 12, aufweisend eine durchbrochene Kernstruktur, mit, in einem Durchbruch der Kernstruktur, einem Einsatz, der zwei halbtransparente Schichten wie in Anspruch 1 definiert trägt, die sich bevorzugt wenigstens teilweise überlagern, wobei die Partikel der zwei Schichten die gleichen sind oder die Partikel unterschiedlich sind, wobei jede der halbtransparenten Schichten bevorzugt eine Lasermarkierung aufweist, wobei die durch Laser gebildeten Markierungen identisch oder unterschiedlich sind, insbesondere zwei unterschiedlichen Ansichten eines selben Objekts oder einer selben Person entsprechen, wobei die Kernstruktur insbesondere ein Bild trägt, das jede der halbtransparenten Schichten wenigstens teilweise überlagert.

## Claims

1. Security structure (1), comprising a semitransparent layer (20) containing a binder (40) and at least goniochromatic metal particles present in the binder in a concentration conferring on the layer its semitransparency, and reflecting the incident light without allowing some of the incident light of colour complementary to that they reflect to pass through, so as to obtain a goniochromatic effect in reflection and a substantially colourless transparency in transmission.

2. Structure according to claim 1, said particles (30) being platelet-shaped and/or said particles comprising a metal core (31), preferably aluminium and/or said particles being oriented substantially flat within the binder and/or said particles being present within the binder in the form of a monolayer.

3. Structure according to any one of the preceding claims, the semitransparent layer (20) being carried by a support (10) comprising a film of thermoplastic material and/or a fibrous layer, in particular made of paper, the thickness of the semitransparent layer (20) preferably being between 2 and 50 microns, and more preferably between 5 and 15 microns.

4. Structure according to any one of the preceding claims, the average size of said particles (30) being between 10 and 50 microns, the dry weight concentration of said particles within the layer (20) preferably being between 5 and 50 % relative to the total weight of binder and particles (30), more preferably between 15 and 45 %, and the volume occupied by said particles within the semitransparent layer preferably being between 5 and 80 %, more preferably between 20 and 50 %, relative to the total volume of the layer.

5. Structure according to any one of the preceding claims, at least one other security element (50) being superimposed at least partially on the semitransparent layer (20), in particular a security element that is metallised, demetallised, printed, coated, marked by laser or a watermark.

6. Structure according to any one of the preceding claims, the semitransparent layer (20) being customised to reveal a pattern (25) of reflected light, the semitransparent layer preferably not being totally transparent in the pattern area, said pattern (25) preferably being formed by laser.

7. Structure according to any one of the preceding claims, comprising a layer (208) of a material markable by laser by local carbonisation, in particular polycarbonate, being superimposed on the semitransparent layer (20), the layer markable by laser preferably comprising a mark (210) formed by laser, the laser mark being superimposed in particular with a perforation formed by demetallisation of a layer of metal.

8. Structure according to any one of the preceding claims, comprising two semitransparent layers (20; 20') as defined in claim 1, respectively on the front and back of a support, said particles (30) being the same in each of said layers or being different, at least one of said layers, preferably each of said layers, preferably comprising a mark (25; 25') formed by laser, the marks preferably being different, in particular corresponding to two views of the same object or the same person, the two marks preferably being at least partially superimposed, the laser mark or marks preferably being at least partially superimposed, the laser mark or marks being superimposed in particular for at least one of them, with a perforation formed by demetallisation of a layer of metal.

9. Structure according to any one of the preceding claims, comprising a non-opaque coloured layer (60), in particular transparent or translucent, comprising at least one dye and completely or partially covering the semitransparent layer (20).

10. Secured article (100) comprising a structure (1) according to any one of the preceding claims, in particular a security element or a secured document such as for example a passport, an identity card, a driving licence, a playing card or an interactive collectible card, a means of payment, in particular a payment card, a banknote, a voucher, a secured tag, a transportation card, a loyalty card, a service card, a subscription card or a specific means of payment, such as a token or a chip, in particular used in casinos, the security structure (1) preferably being in the form of patch, security thread, or coating, in particular deposited on a paper substrate, a synthetic or plastic paper.

11. Article according to claim 10, comprising a core structure (105) and at least one additional layer (110) covering at least partially the core structure, having at least one perforation (111), the security structure (1) being arranged in this perforation (111), the additional layer (110) preferably being made of plastic.

12. Article according to claim 10, comprising two additional layers (110; 160) arranged on each side of the core structure, the additional layer (160) located opposite that having the perforation (111) receiving the security structure (1) also comprising a perforation (161) which receives a patch (200) having a pattern, made in particular by printing, visible under transmitted light through the security structure (1), the perforations (111; 161) preferably being exactly superimposed on each other.

13. Article according to any one of claims 10 to 12, comprising a core structure (105) with on each side of the core structure two semitransparent layers (20; 20') as defined in claim 1, preferably being at least partially superimposed, said particles of the two layers being the same or said particles being different, each of the semitransparent layers preferably comprising a laser mark (25; 25'), the marks formed by laser being the same or different, in particular corresponding to two different views of the same object or of the same person, the core structure (105) preferably bearing an image (230) superimposing at least partially each of the semitransparent layers (20; 20').

14. Article according to any one of claims 10 to 12, comprising a perforated core structure (105) with, in one perforation (260) of the core structure (105), an insert (261) having a semitransparent layer (20) as defined in claim 1, the insert (261) having in particular on one side the semitransparent layer (20) and on the opposite side an image (265) being at least partially superimposed on the semitransparent layer (20).

15. Article according to any one of claims 10 to 12, comprising a perforated core structure, with, in one perforation of the core structure, an insert having two semitransparent layers as defined in claim 1, preferably being at least partially superimposed, said particles of the two layers being the same or said particles being different, each of the semitransparent layers preferably comprising a laser mark, the marks formed by laser being the same or different, in particular corresponding to two different views of the same object or of the same person, the core structure having an image being at least partially superimposed on each of the semitransparent layers.
